# EUROPÄISCHE PATENTSCHRIFT

(11) **EP 3 915 127 B1**
(45) Veröffentlichungstag und Bekanntmachung des Hinweises auf die Patenterteilung: **14.12.2022**
(21) Anmeldenummer: 19701339.4
(22) Anmeldetag: 21.01.2019
(51) Int. Cl.: H01H 9/54, H01H 33/59, H02H 3/087

(54) **GLEICHSTROM-SCHUTZSCHALTGERÄT**
DIRECT CURRENT CIRCUIT BREAKER DEVICE
DISJONCTEUR À COURANT CONTINU

(43) Veröffentlichungstag der Anmeldung: 01.12.2021
(73) Patentinhaber: Eaton Intelligent Power Limited, Dublin 4 (IE)
(72) Erfinder: ASKAN, Kenan, 1090 Wien (AT); BARTONEK, Michael, 1080 Vienna (AT); KATZENSTEINER, Matthias, 1210 Vienna (AT)
(74) Vertreter: Eaton IP Group EMEA
(86) Internationale Anmeldenummer: PCT/EP2019/051406
(87) Internationale Veröffentlichungsnummer: WO 2020/151805

(56) Entgegenhaltungen:
- EP-A2- 0 660 484
- WO-A1-2017/220443
- DE-A1-102017 101 452

## Beschreibung

Die Erfindung betrifft ein Gleichstrom-Schutzschaltgerät gemäß dem Oberbegriff des Patentanspruches 1.

Es sind sog. hybride Schutzschaltgeräte für Gleichstromanwendungen bekannt. Derartige Schutzschaltgeräte weisen als zentralen bzw. funktionswesentlichen Bauteil einen sog. Bypassschalter auf. Dieser Bypassschalter soll im Falle eines sicherheitsrelevanten Abschaltvorganges besonders schnell öffnen, um das Kommutieren des Stromes auf die Leistungshalbleiter zu verursachen ehe der Strom über das Schaltgerät zu sehr ansteigt, welche Leistungshalbleiter dann den betreffenden Strom abschalten. Bei einem Bypassschalter handelt es sich um ein Relais mit mechanischen Schaltkontakten. Zur Betätigung dieses Relais weisen derartige hybride Schutzschaltgeräte eine Treiberschaltung auf, welche aus einem Netzteil des Schutzschaltgeräts gespeist wird.

Die geforderte besonders schnelle Öffnung der Kontakte des Bypassschalters erfordert entsprechend viel elektrische Energie, welche schnell verfügbar sein muss, bzw. welche schnell an die Treiberschaltung abgegeben werden muss. Dies erfordert entsprechend potente Netzteile und Energiespeicher, insbesondere Elektrolytkondensatoren, zur Versorgung der entsprechenden Treiberschaltungen. Derartig starke Netzteile und Kondensatoren weisen jedoch einen erheblichen Platzbedarf auf, und tragen erheblich zur räumlichen Vergrößerung derartiger Schutzschaltgeräte bei. Weiters zieht ein Netzteil einen Ruhestrom, sodass es neben dem Platzbedarf innerhalb des Schutzschaltgeräts weiters zu einer erheblichen Verlustleistung kommt, welche über entsprechende Kühlflächen abgeführt werden muss. Auch die Kondensatoren müssen ständig nachgeladen werden, da diese ansonsten mit der Zeit deren Ladung verlieren. Die daraus resultierende Verlustleitung führt zu einer Temperaturerhöhung innerhalb des Schutzschaltgeräts, welche die Lebensdauer der sicherheitsrelevanten Halbleiter des Schutzschaltgeräts verringern kann.

Die Verwendung eines Antriebes des Bypassschalters mit einer hohen Windungsanzahl würde zwar den erforderlichen Strom reduzieren, führt jedoch zudem - durch die höhere Induktivität einer solchen windungsreichen Spule - zu einer größeren Zeitkonstante und damit zu einer Verlangsamung des Öffnungsvorganges des Bypassschalters.

Schutzschaltgeräte führen meist nur sehr wenige Abschaltvorgänge aufgrund gefährlicher elektrischer Zustände durch. Während der meisten Zeit sind daher ein entsprechend potentes Netzteil sowie die entsprechenden Kondensatoren unnötig, da die abgebbare Maximalleistung nicht gefordert wird, und vielmehr die ständig abzuführende Verlustleistung nachteilig ist. Um daher bei vertretbarem Platzbedarf und abzuführender Verlustleistung trotzdem Kurzschlüsse abschalten zu können, weisen bekannte Schaltgeräte eine Drossel, welche auch als "time buyer inductance" bezeichnet wird, im Stromweg auf, welche naturgemäß nur auf Veränderungen im Stromfluss wirkt, und die Stromanstieg-Rate bei einem Kurzschluss verringert. Allerdings weist auch eine Drossel einen hohen Platzbedarf und ohmsche Verluste auf.

DE102017101452 A1 offenbart einen Gleichstrom-Schutzschalter gemäß dem Oberbegriff des Anspruchs 1.

Aufgabe der Erfindung ist es daher ein Gleichstrom-Schutzschaltgerät der eingangs genannten Art anzugeben, mit welchem die genannten Nachteile vermieden werden können, welches ein geringes Volumen und einen einfachen Aufbau aufweist, und welches einen Kurzschluss schnell abschalten kann. Erfindungsgemäß wird dies durch die Merkmale des Patentanspruches 1 erreicht. Dadurch kann ein Gleichstrom-Schutzschaltgerät geschaffen werden, welches ein geringes Volumen bzw. geringe Bauraumerfordernisse und einen einfachen Aufbau aufweist. Ein solches Gleichstrom-Schutzschaltgerät weist zwar ein Netzteil auf, welches jedoch erheblich kleiner ist, als bei einem Schutzschaltgerät, bei dem das Netzteil auch die Energie für die Notabschaltbetätigung des Bypassschalters bereitstellen muss. Gleichzeitig kann ein gegenständliches Gleichstrom-Schutzschaltgerät den Bypassschalter schneller öffnen als ein herkömmliches Schutzschaltgerät mit einem entsprechend potenten Netzteil.

Es hat sich gezeigt, dass bei bestimmten Einsatzumgebungen ein besonders schnelles Öffnen des Bypassschalters dadurch erzielt werden kann, dass für dieses besonders schnelle Öffnen gar kein Netzteil des betreffenden Gleichstrom-Schutzschaltgeräts verwendet wird. Anstatt also die Energielieferfähigkeit innerhalb des Gleichstrom-Schutzschaltgeräts durch eine ständige Vergrößerung des Netzteils zu erhöhen, kann gegenständlich das Netzteil sogar verkleinert werden, da dies für das besonders schnelles Öffnen des Bypassschalters nicht mehr benötigt wird, sondern lediglich zur Energieversorgung der weiteren Komponenten des Gleichstrom-Schutzschaltgeräts dient.

Wenngleich ein derartiges Schutzschaltgerät zwar bevorzugt noch immer ein Netzteil zur Versorgung der elektronischen Komponenten aufweist, so muss dieses Netzteil nicht in der Lage sein, die Energie zu liefern, um im Falle einer Kurzschlussabschaltung den Bypassschalter zu öffnen. Stattdessen ist ein gegenständliches Schutzschaltgerät zum Betrieb zusammen mit einem Gleichrichter vorgesehen, und nutzt die, am Ausgang des Gleichrichters vorhandene Glättungskapazität bzw. den wenigstens einen Glättungskondensator als Energiequelle zum Antrieb des Bypassschalters. Da die Spannung an diesem Kondensator erheblich höher ist als eine interne Betriebsspannung einer elektronischen Schaltung und ein derartiger Glättungskondensator in der Regel eine Kapazität aufweist, welche um Größenordnungen über der Kapazität liegt, welche zur Stützung einer inneren Versorgung eines herkömmlichen Gleichstrom-Schutzschaltgeräts in diesem verbaut ist, steht bei dem gegenständlichen Gleichstrom-Schutzschaltgerät - im Vergleich zu herkömmlichen hybriden Gleichstrom-Schutzschaltgeräten - ein Vielfaches an elektrischer Ladung bzw. Energie zum Antrieb des Bypassschalters zur Verfügung. Dadurch kann der Antrieb des Bypassschalters mit geringer Windungsanzahl ausgeführt werden, wodurch die Zeitkonstante gering gehalten werden kann, wodurch die Öffnungszeit des Bypassschalters weiter reduziert werden kann. Aufgrund des schnelleren Öffnens des Bypassschalters kann weiters die Induktivität einer - gegebenenfalls vorhandenen - Drossel reduziert werden.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine schematische Darstellung einer ersten Ausführungsform eines gegenständlichen Gleichstrom-Schutzschaltgeräts sowie eine elektrische Umgebung umfassend eine elektrische Quelle, eine Last sowie einen Fehler;
Fig. 2 eine schematische Darstellung einer zweiten Ausführungsform eines gegenständlichen Gleichstrom-Schutzschaltgeräts sowie eine elektrische Umgebung umfassend eine elektrische Quelle, eine Last sowie einen Fehler;
Fig. 3 eine schematische Darstellung einer dritten Ausführungsform eines gegenständlichen Gleichstrom-Schutzschaltgeräts sowie eine elektrische Umgebung umfassend eine elektrische Quelle, eine Last sowie einen Fehler; und
Fig. 4 eine schematische Darstellung lediglich eines Teiles einer vierten Ausführungsform eines gegenständlichen Gleichstrom-Schutzschaltgeräts.

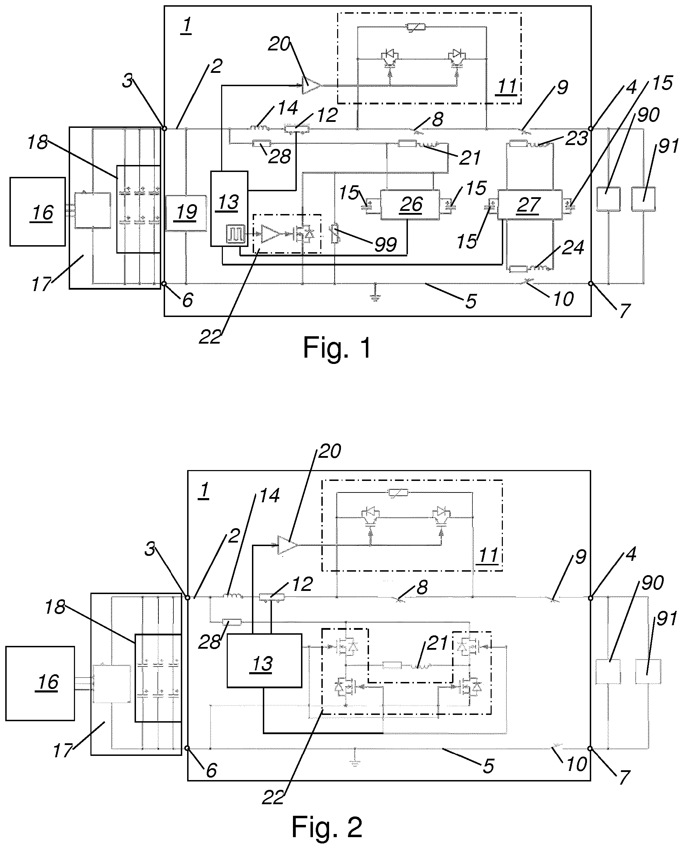

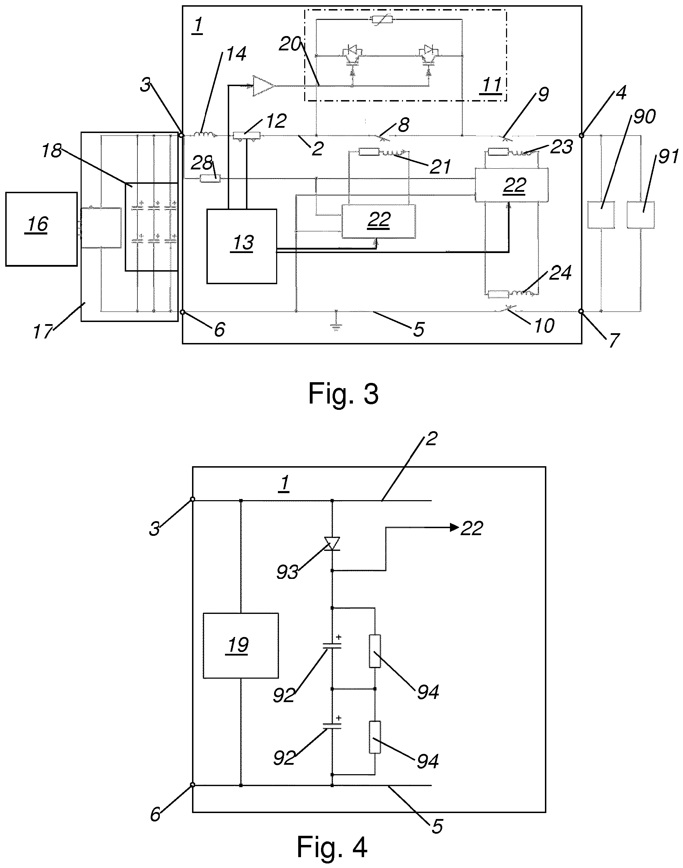

Die Fig. 1 bis 3 zeigen ein Gleichstrom-Schutzschaltgerät 1 mit einer ersten Stromstrecke 2 einer ersten elektrischen Polarität von einem ersten Versorgungsanschluss 3 des Gleichstrom-Schutzschaltgeräts 1 zu einem ersten Lastanschluss 4 des Gleichstrom-Schutzschaltgeräts 1, und mit einer zweiten Stromstrecke 5 einer zweiten elektrischen Polarität von einem zweiten Versorgungsanschluss 6 des Gleichstrom-Schutzschaltgeräts 1 zu einem zweiten Lastanschluss 7 des Gleichstrom-Schutzschaltgeräts 1, wobei in der ersten Stromstrecke 2 oder der zweiten Stromstrecke 5 ein mechanischer Bypassschalter 8 angeordnet ist, wobei der Bypassschalter 8 wenigstens eine Bypassschalter-Erregerspule 21 aufweist, wobei eine erste Halbleiterschaltungsanordnung 11 des Gleichstrom-Schutzschaltgeräts 1 parallel zum Bypassschalter 8 geschaltet ist, wobei eine elektronische Steuereinheit 13 des Gleichstrom-Schutzschaltgeräts 1 dazu ausgebildet ist, die erste Halbleiterschaltungsanordnung 11 anzusteuern, wobei das Gleichstrom-Schutzschaltgerät 1 eine, von der Steuereinheit 13 angesteuerte, zweite Halbleiterschaltungsanordnung 22 aufweist, welche zweite Halbleiterschaltungsanordnung 22 zur Betätigung der Bypassschalter-Erregerspule 21 schaltungstechnisch mit dieser verbunden ist, wobei wenigstens ein Anschluss der zweiten Halbleiterschaltungsanordnung 22 schaltungstechnisch direkt mit dem zweiten Versorgungsanschluss 6 verbunden ist. Fig. 4 zeigt einen Teil eines solchen Gleichstrom-Schutzschaltgeräts 1.

Dadurch kann ein Gleichstrom-Schutzschaltgerät 1 geschaffen werden, welches ein geringes Volumen bzw. geringe Bauraumerfordernisse und einen einfachen Aufbau aufweist. Ein solches Gleichstrom-Schutzschaltgerät 1 weist zwar bevorzugt ein Netzteil 19 auf, welches jedoch erheblich kleiner ist, als bei einem Schutzschaltgerät, bei dem das Netzteil 19 auch die Energie für die Notabschaltbetätigung des Bypassschalters 8 bereitstellen muss. Gleichzeitig kann ein gegenständliches Gleichstrom-Schutzschaltgerät 1 den Bypassschalter 8 schneller öffnen als ein herkömmliches Schutzschaltgerät mit einem entsprechend potenten Netzteil.

Es hat sich gezeigt, dass bei bestimmten Einsatzumgebungen ein besonders schnelles Öffnen des Bypassschalters 8 dadurch erzielt werden kann, dass für dieses besonders schnelle Öffnen gar kein Netzteil des betreffenden Gleichstrom-Schutzschaltgeräts 1 verwendet wird. Anstatt also die Energielieferfähigkeit innerhalb des Gleichstrom-Schutzschaltgeräts 1 durch eine ständige Vergrößerung des Netzteils 19 zu erhöhen, kann gegenständlich das Netzteil 19 sogar verkleinert werden, da dies für das besonders schnelles Öffnen des Bypassschalters 8 nicht mehr benötigt wird, sondern lediglich zur Energieversorgung der weiteren Komponenten des Gleichstrom-Schutzschaltgeräts 1 dient.

Wenngleich ein derartiges Gleichstrom-Schutzschaltgerät 1 zwar bevorzugt noch immer ein Netzteil 19 zur Versorgung der elektronischen Komponenten aufweist, so muss dieses Netzteil 19 nicht in der Lage sein, die Energie zu liefern, um im Falle einer Kurzschlussabschaltung den Bypassschalter 8 zu öffnen. Stattdessen ist ein gegenständliches Gleichstrom-Schutzschaltgerät 1 zum Betrieb zusammen mit einem Gleichrichter 17 vorgesehen, und nutzt die, am Ausgang des Gleichrichters 17 vorhandene Glättungskapazität bzw. den wenigstens einen Glättungskondensator 18 als Energiequelle zum Antrieb des Bypassschalters 8. Da die Spannung an diesem Kondensator 18 erheblich höher ist als eine interne Betriebsspannung einer elektronischen Schaltung und ein derartiger Glättungskondensator 18 in der Regel eine Kapazität aufweist, welche um Größenordnungen über der Kapazität liegt, welche in einem herkömmlichen Gleichstrom-Schutzschaltgeräts 1 verbaut ist, steht bei dem gegenständlichen Gleichstrom-Schutzschaltgerät 1 - im Vergleich zu herkömmlichen hybriden Gleichstrom-Schutzschaltgeräten - ein Vielfaches an elektrischer Ladung bzw. Energie zum Antrieb des Bypassschalters 8 zur Verfügung.

Beispielsweise wird der Antrieb des Bypassschalters 8 eines bekannten Schutzschaltgeräts aus einem Kondensator 15 mit einer Spannung von 60V und einer Kapazität von 100µF gespeist. Demgegenüber weisen professionelle Gleichrichteranwendungen für Drehstrom mit einer Außenleiterspannung von 400 V_{AC} typischerweise eine Spannung von 650 bis 770 V_{DC}, und eine Kapazität von typischerweise zwischen 2,5 und 4 mF auf. Die zur Verfügung stehende Ladungsmenge ist daher bei einem gegenständlichen Gleichstrom-Schutzschaltgerät 1 zwischen ca. 250 und 500 mal größer als bei einem herkömmlichen Schutzschaltgerät.

Dadurch kann der Antrieb des Bypassschalters 8 mit geringer Windungsanzahl ausgeführt werden, wodurch die Zeitkonstante gering gehalten werden kann, wodurch die Öffnungszeit des Bypassschalters 8 weiter reduziert werden kann. Aufgrund des schnelleren Öffnens des Bypassschalters 8 kann weiters die Induktivität einer - gegebenenfalls vorhandenen - Drossel 14 reduziert werden.

Ein weiterer Vorteil des gegenständlichen Gleichstrom-Schutzschaltgeräts 1 ist der Umstand, dass aufgrund der hohen Energie der Kapazitäten 18 des Gleichrichters 17 auch bei einem Einschaltversuch unter Kurzschluss unmittelbar nach einer Kurzschlussauslösung genügend Energie zum schnellen Öffnen des Bypassschalters 8 zur Verfügung steht. Dies ist etwa relevant, wenn versucht wird das Gleichstrom-Schutzschaltgerät 1 während eines weiterhin bestehenden Kurzschlusses einzuschalten.

In den Fig. 1 bis 3 ist weiters die elektrische Umgebung skizziert, wobei lastseitig eine elektrische Last 91 sowie ein elektrischer Fehler 90 dargestellt sind. Eingangseitig sind eine elektrische Quelle 16, ein Gleichrichter 17 sowie die bereits erwähnten Kapazitäten bzw. der wenigstens eine Glättungskondensator 18 dargestellt.

Das gegenständliche Gleichstrom-Schutzschaltgerät 1 ist zur Verwendung bei Gleichstrom bzw. Gleichspannung vorgesehen. Dabei ist vorgesehen, dass das gegenständliche Gleichstrom-Schutzschaltgerät 1 nur zusammen mit einem Gleichrichter 17 verwendet wird, welcher Gleichrichter 17 in an sich bekannter Weise an dessen Ausgang wenigstens einen Kondensator 18 aufweist, welcher in der Regel als Glättungskondensator 18 bezeichnet wird. Üblicherweise sind dabei mehrere parallel geschaltete diskrete Kondensatoren, in der Regel Elektrolytkondensatoren, an dieser Stelle angeordnet. Der Aufbau eines Gleichrichters 17 sowie die Verwendung entsprechender Kondensatoren 18 an dessen Ausgang sind dem Fachmann auf dem Gebiet der Elektrotechnik geläufig.

Das Gleichstrom-Schutzschaltgerät 1 weist zwei Stromstrecken 2, 5 auf, welche für unterschiedliche elektrische Polaritäten, daher Plus und Minus, vorgesehen sind. Das Gleichstrom-Schutzschaltgerät 1 weist daher die erste Stromstrecke 2 für die erste elektrische Polarität auf, welche vom ersten Versorgungsanschluss 3 zum ersten Lastanschluss 4 verläuft, sowie die zweite Stromstrecke 5 für die, von der ersten elektrischen Polarität unterschiedlichen, zweiten elektrischen Polarität, welche vom zweiten Versorgungsanschluss 6 zum zweiten Lastanschluss 7 verläuft. Die einzelnen Anschlüsse 3, 4, 6, 7 sind bevorzugt als Anschlussklemmen ausgebildet.

Das Gleichstrom-Schutzschaltgerät 1 weist bevorzugt in Gehäuse auf, welches wenigstens bereichsweise aus Isolierstoff gebildet ist, und welches bevorzugt wenigstens bereichsweise eine Kühlfläche aufweist.

In den Fig. 1 bis 3 ist zudem eine elektrische Last 91 sowie ein elektrischer Fehler 90 eingezeichnet, welche jeweils an den Lastanschlüssen 4, 7 angeschlossen sind.

Die gegenständlich beschriebene Absicherung der ersten Stromstrecke 2 kann zusätzlich auch an der zweiten Stromstrecke 5 vorgesehen sein.

In der ersten Stromstrecke 2 ist ein mechanischer bzw. elektromechanischer Bypassschalter 8 angeordnet, welcher als Relais ausgebildet ist. Der Bypassschalter 8 weist daher wenigstens eine Bypassschalter-Erregerspule 21 auf, wobei bevorzugt auch mehrere Bypassschalter-Erregerspulen 21 vorgesehen sein können. In den Figuren ist jeweils eine Bypassschalter-Erregerspule 21 dargestellt, wobei neben dem Symbol für die elektrische Spule auch deren ohmscher Spulenwiderstand dargestellt ist. Bevorzugt ist der Bypassschalter 8 als bistabiler, magnetisch verriegelter Schalter bzw. Relais ausgebildet.

Der Bypassschalter 8 wird von der ersten Halbleiterschaltungsanordnung 11 überbrückt, welche mit Leistungshalbleiterschaltern, etwa Back to Back IGBT, bestückt ist, und welche insbesondere als Vier-Quadranten-Schalter ausgebildet ist. Weiters weist die erste Halbleiterschaltungsanordnung 11 bevorzugt einen Varistor 98 auf. Der ersten Halbleiterschaltungsanordnung 11 ist eine erste Treiberstufe 20 zugeordnet. Die Varsitoren und IGBT wurden nicht mit Bezugszeichen versehen. Die grundsätzliche Funktion der entsprechenden Schaltung ist etwa in der WO 2015/028634 A1 der Anmelderin beschrieben.

Das Gleichstrom-Schutzschaltgerät 1 weist weiters eine elektronische Steuereinheit 13 auf, welche die schaltungstechnischen Vorgänge des Gleichstrom-Schutzschaltgeräts 1 steuert. Die Steuereinheit 13 ist etwa umfassend einem µC ausgebildet. Entsprechend ist die Steuereinheit 13 des Gleichstrom-Schutzschaltgeräts 1 dazu ausgebildet, die erste Halbleiterschaltungsanordnung 11 anzusteuern.

Das Gleichstrom-Schutzschaltgerät 1 weist bevorzugt weiters ein Netzteil 19 auf, welches dazu vorgesehen und entsprechend dimensioniert ist, die Steuereinheit 13 mit Energie zu versorgen. Alternativ kann vorgesehen sein, dass die Steuereinheit 13 über separate Hilfsanschlüsse des Gleichstrom-Schutzschaltgeräts 1 mit Energie versorgt wird.

Die Steuereinheit 13 ist zur Detektion eines Kurzschluss- und/oder Überstroms ausgebildet. Dabei kann insbesondere vorgesehen sein, dass wenigstens in der ersten Stromstrecke 2 eine Strommessanordnung 12 angeordnet ist, welche mit der Steuereinheit 13 verbunden ist, wobei die Strommessanordnung 12 bevorzugt umfassend einen Shunt ausgebildet ist. Weiters kann vorgesehen sein, einen Kurzschluss auch mittels des Treibers 20 zu detektieren, welcher einen Kurzschluss durch Detektion einer Entsättigung der Leistungshalbleiterschalter der ersten Halbleiterschaltungsanordnung 11 erkennen kann.

Besonders bevorzugt ist weiters vorgesehen, dass in der ersten Stromstrecke 2 ein erster Trennschalter 9 mit einer ersten Trennschalter-Erregerspule 23 angeordnet ist, dass in der zweiten Stromstrecke 5 ein zweiter Trennschalter 10 mit einer zweiten Trennschalter-Erregerspule 24 angeordnet ist. Diese beiden Trennschalter 9, 10 bzw. Relais dienen lediglich dazu, nach erfolgter Abschaltung des Gleichstrom-Schutzschaltgeräts 1 die galvanische Trennung sicher zu stellen.

Wie bereits dargelegt, erfolgt ein Abschaltvorgang dadurch, dass die erste Halbleiterschaltungsanordnung 11 eingeschaltet wird, und nachfolgend der Bypassschalter 8 geöffnet wird, woraufhin der Strom auf die erste Halbleiterschaltungsanordnung 11 kommutiert, und dann von dieser abgeschaltet wird. Die grundsätzliche Funktion ist etwa auch in der WO 2015/028634 A1 der Anmelderin beschrieben.

Das Gleichstrom-Schutzschaltgerät 1 weist weiters eine, von der Steuereinheit 13 angesteuerte, zweite Halbleiterschaltungsanordnung 22 zur Betätigung der Bypassschalter-Erregerspule 21 auf, welche schaltungstechnisch mit der Bypassschalter-Erregerspule 21 verbunden ist. Die zweite Halbleiterschaltungsanordnung 22 weist bevorzugt zumindest einen Leistungshalbleiterschalter auf, sowie gegebenenfalls eine Treiberstufe. Parallel zur zweiten Halbleiterschaltungsanordnung 22 ist bevorzugt ein Varistor 99 geschaltet.

Es ist vorgesehen, dass die zweite Halbleiterschaltungsanordnung 22 schaltungstechnisch mit dem ersten Versorgungsanschluss 3 bzw. dem zweiten Versorgungsanschluss 6 verbunden ist. Dies ist so zu verstehen, dass wenigstens ein Anschluss der zweiten Halbleiterschaltungsanordnung 22, unter Umgehung des bevorzugt vorgesehenen Netzteiles 19, schaltungstechnisch direkt mit dem zweiten Versorgungsanschluss 6 verbunden ist.

Die zweite Halbleiterschaltungsanordnung 22 bezieht daher keinen Strom aus dem Netzteil 19, welches vorzugsweise Teil des Gleichstrom-Schutzschaltgeräts 1 ist, sondern ist direkt mit den entsprechenden versorgungsseitigen Anschlüssen des Gleichstrom-Schutzschaltgeräts 1 verbunden, wobei bevorzugt lediglich die Bypassschalter-Erregerspule 21 sowie gegebenenfalls ein Vorwiderstand 28 in diesen schaltungstechnischen Verbindungen angeordnet sind, wie dies etwa in den Fig. 1 und 2 der Fall ist. Entsprechend ist weiters bevorzugt vorgesehen, dass ein Strompfad umfassend die zweite Halbleiterschaltungsanordnung 22 sowie die Bypassschalter-Erregerspule 21, unter Umgehung des bevorzugt vorhandenen Netzteiles 19, insbesondere über einen Vorwiderstand 28, schaltungstechnisch mit dem ersten Versorgungsanschluss 3 verbunden ist.

Im Zusammenhang mit dem Anschluss der zweiten Halbleiterschaltungsanordnung 22 sowie weiters der wenigstens einen Bypassschalter-Erregerspule 21 sowie dem bevorzugt vorgesehenen Vorwiderstand 28 ist bevorzugt vorgesehen, dass der erste und der zweite Versorgungsanschluss 3, 6 vertauscht sein können.

Fig. 1 zeigt ein entsprechend ausgebildetes Gleichstrom-Schutzschaltgerät 1, wobei neben der zweiten Halbleiterschaltungsanordnung 22 weiters eine konventionelle Relaistreiberanordnung 26 für den Bypassschalter 8 vorgesehen ist, welche zwei Kondensatoren 15 als Energiequelle aufweist. Die Relaistreiberanordnung 26 ist zur Energieversorgung mit dem Netzteil 19 verbunden, und bezieht die Energie zur Ladung der Kondensatoren 15 ebenfalls aus dem Netzteil 19.

Gemäß FIG.1 ist ein zweiter Anschluss der zweiten Halbleiterschaltungsanordnung 22 schaltungstechnisch mit einem ersten Anschluss der Bypassschalter-Erregerspule 21 verbunden, und ein zweiter Anschluss der Bypassschalter-Erregerspule 21 ist über den bevorzugt vorgesehenen Vorwiderstand 28 schaltungstechnisch mit dem ersten Versorgungsanschluss 3 verbunden.

Die zweite Halbleiterschaltungsanordnung 22 ist bei dieser Ausführungsform, welche auch über die Relaistreiberanordnung 26 verfügt, lediglich dazu vorgesehen, den Bypassschalter 8 im Falle eines Abschaltvorganges anzusteuern, welcher nach einem detektierten Kurzschluss- und/oder Überstrom erfolgt.

Bevorzugt ist zur Ansteuerung der Bypassschalter-Erregerspule 21 vorgesehen, dass die Steuereinheit 13 die zweite Halbleiterschaltungsanordnung 22 vorgebbar getaktet, insbesondere zufolge einer Pulsweitenmodulation, Ein/Aus schaltet, wie dies durch ein entsprechendes Symbol in der Steuereinheit 13 in Fig. 1 verdeutlicht wird. Eine entsprechende Ansteuerung kann auch bei den anderen Ausführungsformen vorgesehen sein.

Ein betriebsmäßiges Ein/Ausschalten erfolgt bei einem Gleichstrom-Schutzschaltgerät 1 gemäß Fig.1 mittels der Relaistreiberanordnung 26, sowie der weiters vorhandenen Trennschaltertreiberanordnung 27, welche ebenfalls über Kondensatoren 15 als Energiequelle verfügt. Die Relaistreiberanordnung 26 und die Trennschaltertreiberanordnung 27 können einstückig ausgebildet sein. Bei einem lediglich betriebsmäßigem Ein/Ausschalten ist kein besonders schnelles Öffnen des Bypassschalters 8 gefordert, da keine höhen Ströme geschaltet werden müssen. Deshalb können die Kondensatoren 15 verhältnismäßig schwach bzw. klein ausgelegt werden, und verursachen keine hohen Ruheströme des Netzteils 19.

In der ersten Stromstrecke 2 ist bevorzugt eine Drossel 14 angeordnet. Durch das nunmehr gegebene besonders schnelle Öffnen des Bypassschalters 8 kann diese Drossel 14 erheblich verkleinert werden, da ein Kurzschluss nunmehr bei bereits deutlich geringerer Stromstärke abgeschaltet werden kann, als dies bei herkömmlichen Gleichstrom-Schutzschaltgeräten 1 der Fall ist. Dadurch können weiters auch für die erste Halbleiterschaltungsanordnung 11 Halbleiterschalter verwendet werden, welcher geringer belastbar sind, und welche daraus folgend auch geringere Abmessungen aufweisen, was wiederum zu einer geringeren Schleifeninduktanz führt, wodurch die Kommutierungszeit eines Kurzschlussstromes auf die erste Halbleiterschaltungsanordnung 11 wiederum verkürzt wird.

Fig. 2 zeigt eine zweite Ausführungsform, welche ohne die Relaistreiberanordnung 26 auskommt, wobei es sich bei der Relaistreiberanordnung 26 - wie bereits dargelegt - um diejenige Schaltung handelt, welche ansonsten für das langsame betriebsgemäße Schalten vorgesehen ist, und welche bei Fig. 2 ebenfalls weggelassen wurde. Das Gleichstrom-Schutzschaltgerät 1 gemäß Fig. 2 weist diesbezüglich lediglich die zweite Halbleiterschaltungsanordnung 22 auf.

Bei einem Gleichstrom-Schutzschaltgerät 1 gemäß Fig. 2 ist die Steuereinheit 13 weiters dazu ausgebildet, die zweite Halbleiterschaltungsanordnung 22 auch bei einem betriebsmäßigen Schaltvorgang vorgebbar getaktet, insbesondere zufolge einer Pulsweitenmodulation, Ein/Aus zu schalten. Allerdings kann ein derartiges betriebsmäßiges Schalten mit deutlich geringerer Leistungsbeaufschlagung der Bypassschalter-Erregerspule 21 erfolgen. Fig. 2 zeigt darüber hinaus einen möglichen Aufbau der zweiten Halbleiterschaltungsanordnung 22, umfassend eine MOSFET-Brückenschaltung mit vier Halbleiterschaltern. Weiters sei darauf hingewiesen, dass in Fig. 2 die Bypassschalter-Erregerspule 21 etwas beabstandet von dem Bypassschalter 8 dargestellt ist, wobei es sich jedoch trotzdem um die Bypassschalter-Erregerspule 21 des Bypassschalter 8 handelt.

Die Ansteuerung der beiden Trennschalter 9, 10 ist in Fig. 2 nicht dargestellt, kann jedoch ebenfalls mit der zweiten Halbleiterschaltungsanordnung 22 erfolgen.

Fig. 3 zeigt eine dritte Ausführungsform eines gegenständlichen Gleichstrom-Schutzschaltgeräts 1. Bei dieser Ausführungsform ist vorgesehen, dass auch für die Schaltvorgänge des ersten und zweiten Trennschalters 9, 10 kein netzteilgespeister Relaistreiber 27 vorgesehen ist, sondern auch dieser Schaltvorgang durch Speisung aus der Glättungskapazität 18 des Gleichrichters 17 erfolgt. Entsprechend ist dabei vorgesehen, dass die zweite Halbleiterschaltungsanordnung 22, schaltungstechnisch mit der ersten Trennschalter-Erregerspule 23 und/oder der zweiten Trennschalter-Erregerspule 24 sowie weiters mit dem ersten Versorgungsanschluss 3 und dem zweiten Versorgungsanschluss 6 verbunden ist. In Fig. 3 sind diesbezüglich zwei unabhängige Blöcke mit dem Bezugszeichen 22 eingezeichnet, wobei jedoch bevorzugt vorgesehen ist, dass diese beiden Blöcke bei der realen Umsetzung einstückig ausgebildet sind.

Fig. 4 zeigt weiters lediglich ein eingangsseitiges Detail eines gegenständlichen Gleichstrom-Schutzschaltgeräts 1. Dieses weist zwischen dem ersten Versorgungsanschluss 3 und dem zweiten Versorgungsanschluss 6 wenigstens einen Kondensator 92 auf, welcher bevorzugt als Elektrolytkondensator ausgebildet ist. In Fig. 4 sind zwei derartige Kondensatoren 92 dargestellt, sowie eine Diode um den verpolungssicheren Betrieb der Kondensatoren 92 sicher zu stellen. Weiters sind Widerstände 94 parallel zu den Kondensatoren 92 geschaltet um über einen Spannungsteiler die gleiche Spannung an jedem der Kondensatoren 92 sicher zu stellen. Die Schaltung gemäß Fig. 4 weist Vorteile bei langen Leitungslängen zwischen dem Gleichrichter 17 und dessen Kondensatoren 18 und dem Gleichstrom-Schutzschaltgeräts 1 auf.

## Patentansprüche

1. Gleichstrom-Schutzschaltgerät (1) mit einer ersten Stromstrecke (2) einer ersten elektrischen Polarität von einem ersten Versorgungsanschluss (3) des Gleichstrom-Schutzschaltgeräts (1) zu einem ersten Lastanschluss (4) des Gleichstrom-Schutzschaltgeräts (1), und mit einer zweiten Stromstrecke (5) einer zweiten elektrischen Polarität von einem zweiten Versorgungsanschluss (6) des Gleichstrom-Schutzschaltgeräts (1) zu einem zweiten Lastanschluss (7) des Gleichstrom-Schutzschaltgeräts (1), wobei in der ersten Stromstrecke (2) oder der zweiten Stromstrecke (5) ein mechanischer Bypassschalter (8) angeordnet ist, wobei der Bypassschalter (8) wenigstens eine Bypassschalter-Erregerspule (21) aufweist, wobei eine erste Halbleiterschaltungsanordnung (11) des Gleichstrom-Schutzschaltgeräts (1) parallel zum Bypassschalter (8) geschaltet ist, wobei eine elektronische Steuereinheit (13) des Gleichstrom-Schutzschaltgeräts (1) dazu ausgebildet ist, die erste Halbleiterschaltungsanordnung (11) anzusteuern, wobei das Gleichstrom-Schutzschaltgerät (1) eine, von der Steuereinheit (13) angesteuerte, zweite Halbleiterschaltungsanordnung (22) aufweist, welche zweite Halbleiterschaltungsanordnung (22) zur Betätigung der Bypassschalter-Erregerspule (21) schaltungstechnisch mit dieser verbunden ist, **dadurch gekennzeichnet, dass** wenigstens ein Anschluss der zweiten Halbleiterschaltungsanordnung (22) schaltungstechnisch direkt mit dem zweiten Versorgungsanschluss (6) verbunden ist.

2. Gleichstrom-Schutzschaltgerät (1) nach Anspruch 1, **dadurch gekennzeichnet, dass** ein Strompfad umfassend die zweite Halbleiterschaltungsanordnung (22) sowie die Bypassschalter-Erregerspule (21), insbesondere über einen Vorwiderstand (28), schaltungstechnisch mit dem ersten Versorgungsanschluss (3) verbunden ist.

3. Gleichstrom-Schutzschaltgerät (1) nach Anspruch 1 oder 2, **dadurch gekennzeichnet, dass** das Gleichstrom-Schutzschaltgerät (1) ein Netzteil (19) aufweist, welches wenigstens die elektronische Steuereinheit (13) mit Energie versorgt, und dass der Anschluss der zweiten Halbleiterschaltungsanordnung (22), unter Umgehung des Netzteiles (19), schaltungstechnisch direkt mit dem zweiten Versorgungsanschluss (6) verbunden ist.

4. Gleichstrom-Schutzschaltgerät (1) nach Anspruch 1, 2 oder 3, **dadurch gekennzeichnet, dass** die Steuereinheit (13) zur Detektion eines Kurzschluss- und/oder Überstroms ausgebildet ist, und dass die Steuereinheit (13) weiters dazu ausgebildet ist, die zweite Halbleiterschaltungsanordnung (22) bei einem detektierten Kurzschluss- und/oder Überstrom vorgebbar getaktet, insbesondere zufolge einer Pulsweitenmodulation, Ein/Aus zu schalten.

5. Gleichstrom-Schutzschaltgerät (1) nach einem der Ansprüche 1 bis 4, **dadurch gekennzeichnet, dass** die Steuereinheit (13) weiters dazu ausgebildet ist, die zweite Halbleiterschaltungsanordnung (22) bei einem betriebsmäßigen Schaltvorgang vorgebbar getaktet, insbesondere zufolge einer Pulsweitenmodulation, Ein/Aus zu schalten.

6. Gleichstrom-Schutzschaltgerät (1) nach einem der Ansprüche 1 bis 5, **dadurch gekennzeichnet, dass** in der ersten Stromstrecke (2) ein erster Trennschalter (9) mit einer ersten Trennschalter-Erregerspule (23) angeordnet ist, dass in der zweiten Stromstrecke (5) ein zweiter Trennschalter (10) mit einer zweiten Trennschalter-Erregerspule (24) angeordnet ist, dass die erste Trennschalter-Erregerspule (23) und die zweite Trennschalter-Erregerspule (24) schaltungstechnisch mit der wenigstens einen zweiten Halbleiterschaltungsanordnung (22) verbunden sind.

7. Gleichstrom-Schutzschaltgerät (1) nach einem der Ansprüche 1 bis 6, **dadurch gekennzeichnet, dass** zwischen dem ersten Versorgungsanschluss (3) und dem zweiten Versorgungsanschluss (6) wenigstens ein Kondensator (92) geschaltet ist.

8. System aus einem Gleichrichter und einem Gleichstrom-Schutzschaltgerät (1) nach einem der Ansprüche 1 bis 7, wobei der Gleichrichter (17) wenigstens einen Glättungskondensator (18) aufweist, wobei das Gleichstrom-Schutzschaltgerät (1) an einem Ausgang des Gleichrichters (17) angeschlossen ist, und wobei der wenigstens eine Glättungskondensator (18) des Gleichrichters (17) zur Energieversorgung der zweiten Halbleiterschaltungsanordnung (22) des Gleichstrom-Schutzschaltgeräts (1) dient.

## Claims

1. A direct current circuit breaker device (1) having a first current path (2) of a first electrical polarity from a first supply connection (3) of the direct current circuit breaker device (1) to a first load connection (4) of the direct current circuit breaker device (1), and having a second current path (5) of a second electrical polarity from a second supply connection (6) of the direct current circuit breaker device (1) to a second load connection (7) of the direct current circuit breaker device (1), wherein a mechanical bypass switch (8) is arranged in the first current path (2) or the second current path (5), wherein the bypass switch (8) comprises at least one bypass switch excitation coil (21), wherein a first semiconductor circuit arrangement (11) of the direct current circuit breaker device (1) is connected in parallel with the bypass switch (8), wherein an electronic control unit (13) of the direct current circuit breaker device (1) is configured to control the first semiconductor circuit arrangement (11), wherein the direct current circuit breaker device (1) comprises a second semiconductor circuit arrangement (22) controlled by the control unit (13), which second semiconductor circuit arrangement (22) is connected to the bypass switch excitation coil (21) in terms of circuitry for the activation thereof, **characterized in that** at least one connection of the second semiconductor circuit arrangement (22) is directly connected in terms of circuitry to the second supply connection (6).

2. The direct current circuit breaker device (1) according to Claim 1, **characterized in that** a current pathway comprising the second semiconductor circuit arrangement (22) and the bypass switch excitation coil (21) is connected in terms of circuitry, in particular via a series resistor (28), to the first supply connection (3).

3. The direct current circuit breaker device (1) according to Claim 1 or 2, **characterized in that** the direct current circuit breaker device (1) comprises a power supply unit (19) which supplies at least the electronic control unit (13) with power, and **in that** the connection of the second semiconductor circuit arrangement (22) is directly connected in terms of circuitry to the second supply connection (6), bypassing the power supply unit (19).

4. The direct current circuit breaker device (1) according to Claim 1, 2 or 3, **characterized in that** the control unit (13) is configured to detect a short-circuit current and/or an overcurrent, and **in that** the control unit (13) is further configured to switch the second semiconductor circuit arrangement (22) on/off in a predeterminable clocked manner, in particular according to a pulse width modulation, in the event of a detected short-circuit current and/or overcurrent.

5. The direct current circuit breaker device (1) according to any of Claims 1 to 4, **characterized in that** the control unit (13) is further configured to switch the second semiconductor circuit arrangement (22) on/off in a predeterminable clocked manner, in particular according to a pulse width modulation, during an operational switching process.

6. The direct current circuit breaker device (1) according to any of Claims 1 to 5, **characterized in that** a first disconnecting switch (9) having a first disconnecting switch excitation coil (23) is arranged in the first current path (2), **in that** a second disconnecting switch (10) having a second disconnecting switch excitation coil (24) is arranged in the second current path (5), **in that** the first disconnecting switch excitation coil (23) and the second disconnecting switch excitation coil (24) are connected in terms of circuitry to the at least one second semiconductor circuit arrangement (22).

7. The direct current circuit breaker device (1) according to any of Claims 1 to 6, **characterized in that** at least one capacitor (92) is connected between the first supply connection (3) and the second supply connection (6).

8. A system consisting of a rectifier and a direct current circuit breaker device (1) according to any of Claims 1 to 7, wherein the rectifier (17) comprises at least one smoothing capacitor (18), wherein the direct current circuit breaker device (1) is connected to an output of the rectifier (17), and wherein the at least one smoothing capacitor (18) of the rectifier (17) serves to supply power to the second semiconductor circuit arrangement (22) of the direct current circuit breaker device (1).

## Revendications

1. Disjoncteur à courant continu (1) comprenant un premier trajet de courant (2) d'une première polarité électrique d'un premier raccordement d'alimentation (3) du disjoncteur à courant continu (1) à un premier raccordement de charge (4) du disjoncteur à courant continu (1) et un second trajet de courant (5) d'une seconde polarité électrique d'un second raccordement d'alimentation (6) du disjoncteur à courant continu (1) à un second raccordement de charge (7) du disjoncteur à courant continu (1), dans lequel un commutateur de dérivation (8) mécanique est agencé dans le premier trajet de courant (2) ou le second trajet de courant (5), dans lequel le commutateur de dérivation (8) présente au moins une bobine d'excitation (21) de commutateur de dérivation, dans lequel un premier ensemble circuit à semi-conducteurs (11) du disjoncteur à courant continu (1) est commuté parallèlement au commutateur de dérivation (8), dans lequel une unité de commande (13) électronique du disjoncteur à courant continu (1) est conçue pour commander le premier ensemble circuit à semi-conducteurs (11), dans lequel le disjoncteur à courant continu (1) présente un second ensemble circuit à semi-conducteurs (22) commandé par l'unité de commande (13), lequel second ensemble circuit à semi-conducteurs (22) est relié par circuit à la bobine d'excitation (21) de commutateur de dérivation pour l'actionnement de celle-ci, **caractérisé en ce qu'**au moins un raccordement du second ensemble circuit à semi-conducteurs (22) est relié par circuit directement au second raccordement d'alimentation (6).

2. Disjoncteur à courant continu (1) selon la revendication 1,
**caractérisé en ce qu'**un chemin de courant comprenant le second ensemble circuit à semi-conducteurs (22) ainsi que la bobine d'excitation (21) de commutateur de dérivation, est relié par circuit, en particulier par l'intermédiaire d'une résistance en série (28), avec le premier raccordement d'alimentation (3).

3. Disjoncteur à courant continu (1) selon la revendication 1 ou 2,
**caractérisé en ce que** le disjoncteur à courant continu (1) présente une alimentation secteur (19), qui alimente au moins l'unité de commande (13) électronique en énergie et **en ce que** le raccordement du second ensemble circuit à semi-conducteurs (22), par contournement de l'alimentation secteur (19), est relié par circuit directement avec le second raccordement d'alimentation (6).

4. Disjoncteur à courant continu (1) selon la revendication 1, 2 ou 3,
**caractérisé en ce que** l'unité de commande (13) est conçue pour la détection d'un courant de court-circuit et/ou d'une surintensité et **en ce que** l'unité de commande (13) est en outre conçue pour allumer/éteindre le second ensemble circuit à semi-conducteurs (22) lors de la détection d'un courant de court-circuit et/ou d'une surintensité de manière cadencée pouvant être prédéfinie, en particulier à la suite d'une modulation de largeur d'impulsion.

5. Disjoncteur à courant continu (1) selon l'une quelconque des
revendications 1 à 4, **caractérisé en ce que** l'unité de commande (13) est en outre conçue pour allumer/éteindre le second ensemble circuit à semi-conducteurs (22) lors d'un processus de commutation en fonctionnement de manière cadencée pouvant être prédéfinie, en particulier à la suite d'une modulation de largeur d'impulsion.

6. Disjoncteur à courant continu (1) selon l'une quelconque des
revendications 1 à 5, **caractérisé en ce qu'un** premier coupe-circuit (9) avec une première bobine d'excitation (23) de coupe-circuit est agencé dans le premier trajet de courant (2), **en ce qu'**un second coupe-circuit (10) avec une seconde bobine d'excitation (24) de coupe-circuit est agencé dans le second trajet de courant (5), **en ce que** la première bobine d'excitation (23) de coupe-circuit et la seconde bobine d'excitation (24) de coupe circuit sont reliées par circuit à l'au moins un second ensemble circuit à semi-conducteurs (22).

7. Disjoncteur à courant continu (1) selon l'une quelconque des
revendications 1 à 6, **caractérisé en ce qu'**au moins un condensateur (92) est commuté entre le premier raccordement d'alimentation (3) et le second raccordement d'alimentation (6).

8. Système constitué d'un redresseur et d'un disjoncteur à courant continu (1) selon l'une quelconque des revendications 1 à 7, dans lequel le redresseur (17) présente au moins un condensateur de lissage (18), dans lequel le disjoncteur à courant continu (1) est raccordé à une sortie du redresseur (17) et dans lequel l'au moins un condensateur de lissage (18) du redresseur (17) sert à l'alimentation en énergie du second ensemble circuit à semi-conducteurs (22) du disjoncteur à courant continu (1).
